# EUROPEAN PATENT SPECIFICATION

(11) **EP 1 795 790 B1**
(45) Date of publication and mention of the grant of the patent: **03.12.2008**
(21) Application number: 05425876.9
(22) Date of filing: 09.12.2005
(51) Int. Cl.: F16K 24/04, F16K 17/00

(54) **Venting device**
Entlüftungseinrichtung
Dispositif de ventilation

(43) Date of publication of application: 13.06.2007
(73) Proprietor: Olab S.r.l., 25030 Torbole Casaglia (Brescia) (IT)
(72) Inventor: Bottura, Cesare, 25121 Brescia (IT)
(74) Representative: Crippa, Paolo Ernesto

(56) References cited:
- WO-A-01/23792
- US-A- 4 640 304
- US-A- 5 019 141
- US-B1- 6 247 487

## Description

The object of the present invention relates to a venting device for a tank, wherein at least one fluid is contained. In particular, the object of the present invention relates to a venting device for a tank, wherein a bi-phase system is contained.

Some apparatus comprises a tank for heating, wherein at least one fluid is contained, for example water. In order for the apparatus to work properly, the water needs to come out of the tank at a set pressure.

US 5,019,141, WO 01/23792, US 4,640,304 and US 6,247,487 disclose some devices of the prior art.

Consequently, the apparatus also comprises a venting valve, coupled to the tank, which opens in relation to set values of the pressure of the fluid inside the tank.

However, it has been noticed that, contrary to what is desirable and necessary for proper working of the apparatus, the conditions for expelling the water do not remain constant between one use and another.

It is the object of the present invention to satisfy the above needs and, at the same time, remedy the above disadvantages, with reference to the prior art.

The features and advantages of the device, according to the present invention, will be recognised from the description, which is given below by way of example and not limiting, in accordance with the following drawings, wherein:

- figure 1 represents a venting device according to the present invention, in a first configuration, called a rest configuration;

- figure 2 shows the device in figure 1 in a second configuration, called an air venting configuration;

- figure 3 represents the device in figure 1 in a third configuration, called a waiting configuration;

- figure 4 shows the device in figure 1 in a fourth configuration, called a water venting configuration, and

- figures 5a and 5b illustrate a sectioned side view and a top view respectively of a spacer of the device in figure 1.

With reference to the accompanying drawings, an apparatus comprising a tank 2 and a venting device 4 are globally indicated with reference numeral 1.

The tank 2, which exhibits an internal chamber 6, is suitable for containing two fluids, in other words a bi-phase system, with different densities, for example water and air.

The tank 2 thus contains said fluids with different densities, either because it is fed voluntarily with said fluids, or because the presence of air in the tank is unavoidable.

For example, a tank filled with water to a certain height, then covered with a lid, contains two fluids: water, which occupies a volume of water, and air, which occupies a volume of air equal to the difference between the volume of the tank and the volume of water.

The device 4 comprises a body 8 that is hollow inside and generally cylindrical shaped, which extends along an X-X body axis, between a lower portion 10, which is close to said tank in the tank assembly, and an upper portion 12, opposite said lower portion.

Inside the body 8 from the lower portion 10 to the upper portion, 12 a flange space, a central space 14 and an end space are distinguished, and together they form the internal passing cavity of the body 8.

Furthermore, the body 8 exhibits at least one delivery tube 15, which is in fluidic communication with said central space 14, for example with a radial extension in relation to said X-X body axis.

The device 4 also comprises a flange 16, which also has an internal passing cavity, connected to the body 8, which is, in particular, at least partially housed in said flange space of the body 8.

In an embodiment, the flange 16 comprises a coupling portion 18 that is suitable for being coupled to the body 8 and, in particular, received in said flange space, and a shank 20.

Said coupling portion is preferably threaded and exhibits at least one safety milling.

After coupling the flange 16 to the body 8, said shank 20 protrudes at the bottom from said body 8.

Inside, the shank 20 of the flange 16, comprises an annular projection 22, which creates a reduction in the flow-area of the internal cavity of the flange 16.

On the outside, the shank 20 comprises a threaded part for coupling to the tank.

At the top, the flange 16 exhibits a spacer slot and, above this, an insert slot.

In agreement with a preferred embodiment, the device 4 comprises a spacer 30 housed in said spacer slot of the flange 16, and an insert 32, housed in said insert slot of the flange 16.

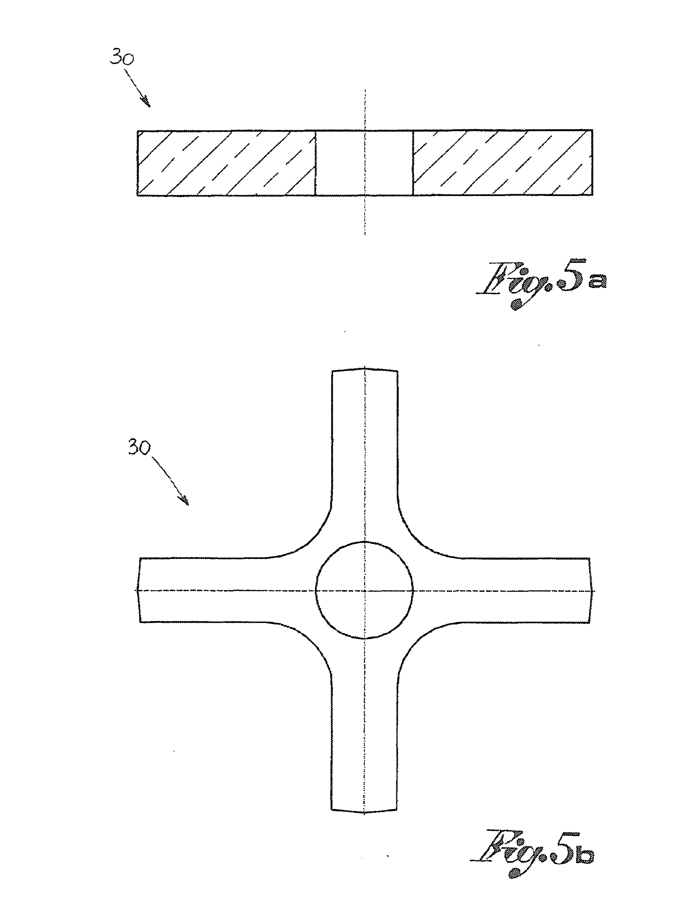

The spacer 30 is made in the form of a cross and perforated in the middle (figures 5a and 5b).

In the same way, the insert 32 exhibits an internal funnel-shaped passage, made up of a lower truncated cone-shaped part and an upper cylindrical part, which creates a reduction in the flow-area of the fluids.

The device 4 also comprises a piston 40, which is also hollow inside.

A base slot, a pad slot, an intermediate tube 42 and a preferably threaded connecting slot are distinguished in the cavity of the piston 40, from its lower end to its upper end.

Furthermore, inside, the piston 40 exhibits side tubes 44 that are in fluidic communication with said intermediate tube 42, for example with a radial extension in relation to said X-X body axis.

Said intermediate tube 42, exhibits a truncated cone-shaped stop slot 46 at the bottom in relation to said side tubes 44, in other words upstream of them, which narrows the flow-area of said intermediate tube 42.

Furthermore, the device 4 comprises a nut 50, which is coupled on the outside to said piston 40, for example level with its lower end, the size of which is such as to make guiding means for the piston sliding on the walls of the central space of the body.

Moreover, the device 4 comprises a seal ring 52, which is coupled on the outside to said piston 40, at the top in relation to said nut 50.

The device 4 also comprises a base 60, housed in said base slot of the piston 40, made from a perforated disc that narrows the flow-area of the piston 40.

Moreover, the device 4 comprises a pad 62, housed in said pad slot of the piston, which has a perforated, internal resting slot 64 with a funnel type configuration, comprising a lower cylindrical part and an upper truncated cone-shaped part.

The device 4 also comprises a first ball 70, made in a first material, for example an elastomeric material, housed in said intermediate part 42 of the cavity of the piston 40.

The ball 70, which moves inside said intermediate part, is confined inside this pad 62, at the bottom, and by the stop slot 46 at the top.

Furthermore, the device 4 comprises a second ball 80, made in a second material, for example an elastomeric material, which is, for example, identical to said first material, housed in said shank 20 of the flange 16.

The ball 80, which moves inside said shank, is confined inside this by the annular projection 22 at the bottom, and by the spacer 30 at the top.

Furthermore, the device 4 comprises a handle 90, coupled to the upper end of the piston 40, which is, in particular, partially housed in said connecting slot of the piston 40. The handle 90 closes the internal cavity of the piston at the top.

To illustrate the working of the venting device 4, let us say that the device is coupled to the tank 2, where there is water and air.

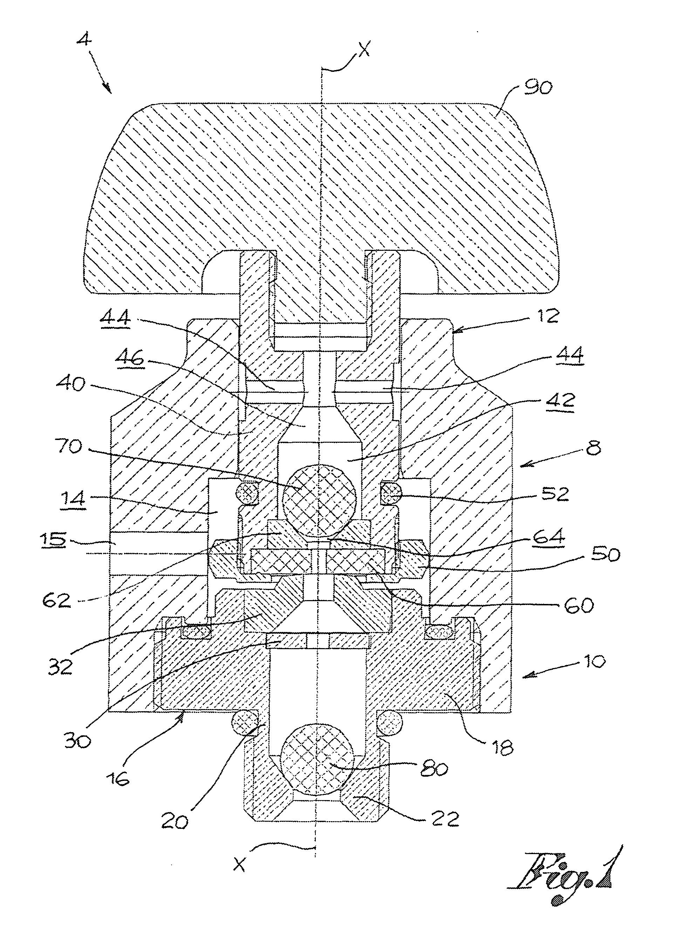

In a first configuration of the device, called a rest configuration, the second ball 80 is resting on the annular projection 22 of the flange 16, the piston 40 is resting on the insert 32, and the first ball 70 is resting on the pad 62 (figure 1).

In said rest configuration, the piston 40 is in a lowered position, wherein the base 60 is in contact with the insert 32, forming a seal between the piston 40 and the insert 32.

In said rest configuration, the seal ring 52, coupled to the piston 40, is located in the central space 14 of the body 8.

During normal working of the apparatus 1, the tank 2 is heated.

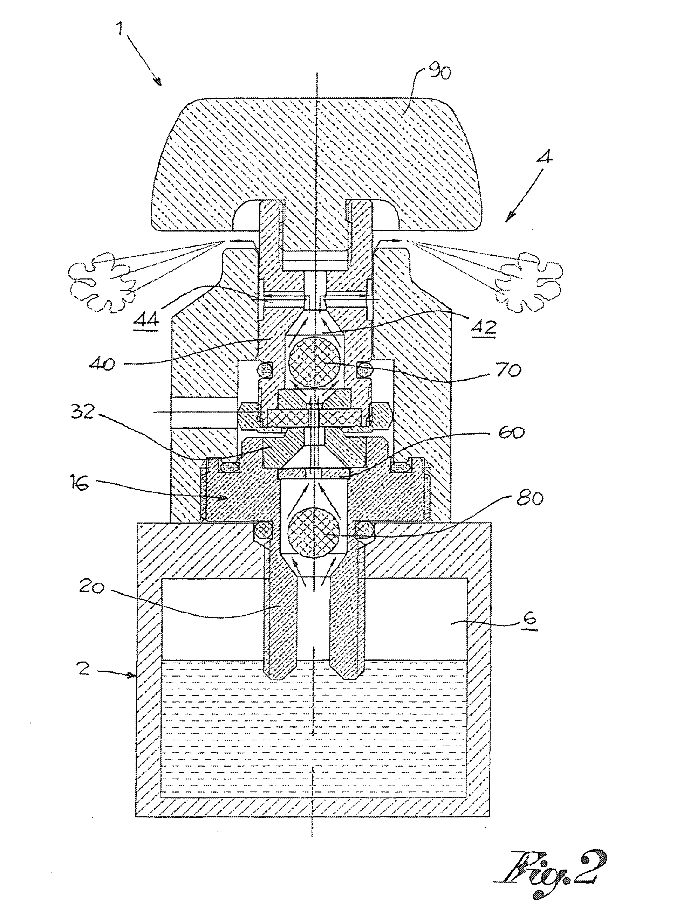

The device then goes from the rest configuration to the air venting configuration (figure 2). Note that by coupling the device to the tank, this being partially full of water, the shank 20 is partially immersed, generally leaving a volume of air confined inside it between the free surface of the water and the second ball 80.

When heated, the air expands, crossing the flange 16 and lifting the second ball 80, and crossing the piston 40 and lifting the first ball 70. The air vents out of the apparatus 1, through the central space 42 and the side tubes 44 of the piston 40, for example coming out from under the handle 90.

Said device thus exhibits a first venting path that is suitable for joining the internal chamber 6 of the tank to the outside through which the expanding air vents out of the device.

Note that in said air venting configuration, the piston 40 remains in the lowered position, in other words resting on the insert 32, due to its weight and the weight of the parts to which it is coupled, for example the handle 90.

In other words, the fluidic continuity between the cavity of the flange 16 and the internal cavity of the piston 40 is guaranteed in said air venting configuration.

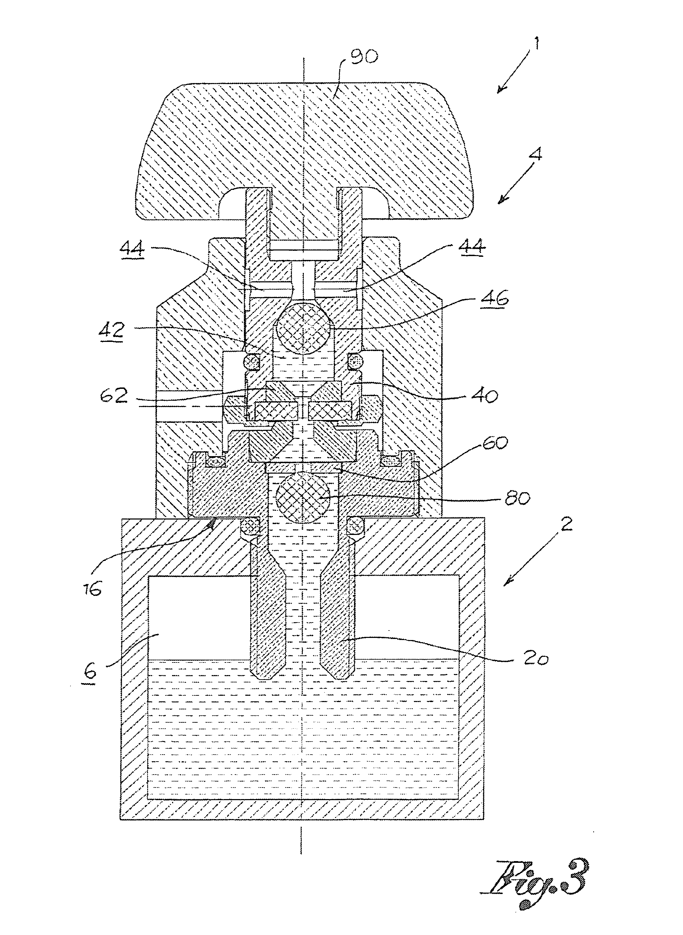

Continuing to heat the tank, the device moves into a waiting configuration (figure 3).

In said configuration, for example because of the action of the air sacks present in the chamber 6 of the tank 2, the water goes back up through the flange 16, in particular through the shank 20 of said flange.

Beneath the action of the water, the second floating ball 80 lifts up until it is level with the spacer 30. As the spacer is configured in the form of a perforated cross, also when the ball 80 is resting on the spacer 30, it does not obstruct any passageway, as this is guaranteed by the peripheral openings.

Then the water goes back up through the piston 40, lifting the first ball 70, which is also floating.

The first ball 70 moves into contact inside the conical stop slot 46 of the piston 40, closing said piston at the top.

Note that the piston 40 remains in the lowered position, in other words resting on the insert 32, in particular resting with the base 60 on the insert 32 in this waiting configuration too, because of its weight and the weight of the parts to which it is coupled, for example the handle 90.

In other words, the fluidic continuity between the cavity of the flange 16 and the internal cavity of the piston 40 is also guaranteed in said waiting configuration.

In other words, in this case the fluidic continuity extends to the water present in the tank.

As we can appreciate, the first ball 70, the stop slot 46 and the pad 62 create a preferred embodiment of first intercepting means, set along said first venting path, which are suitable for going from an open configuration (figure 2) wherein they allow the air to pass from the internal chamber 6 of the tank 2 to the outside, to a closed configuration (figure 3) wherein they close said first air venting path.

Moreover, said first intercepting means can be influenced by the water to go from said open configuration to said closed configuration.

Also note that said first intercepting means are sensitive to the density of an agent acting upon them, going from said open configuration to said closed configuration only when influenced by the water, whose density is different from that of the air.

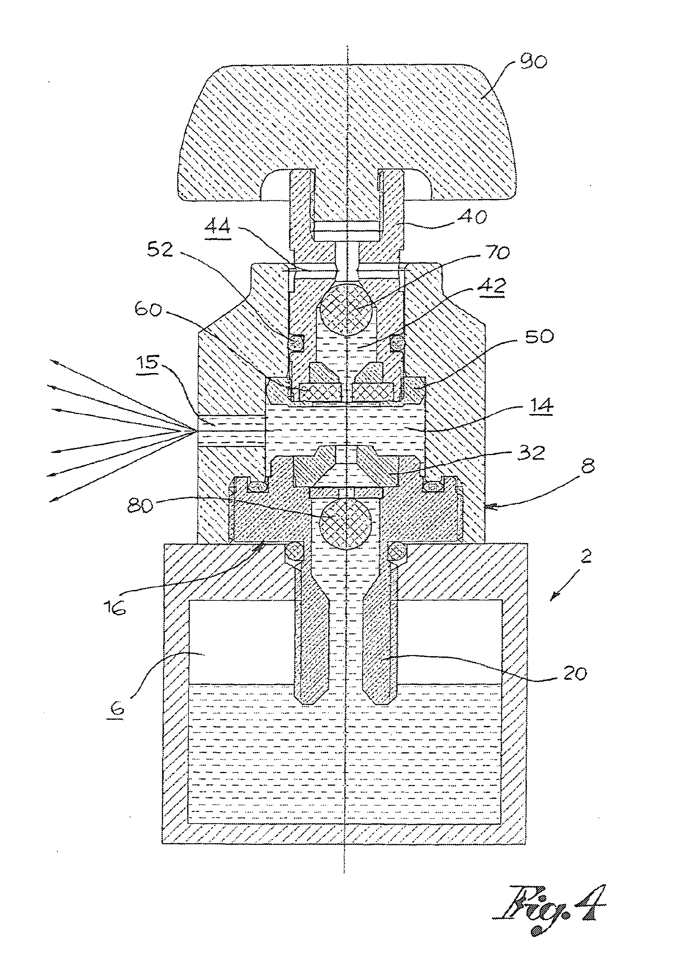

Continuing to heat the tank, the water reaches a greater pressure limit, so that the device moves into a water venting configuration (figure 4).

In particular, in relation to said greater pressure limit of the water, said pressure influences the piston 40 and lifts it up from the lowered position.

When the piston is lifted, it fluidically joins the central space 14 of the body 8 to the delivery tube 15 of said body 8, so that the water is delivered outside, exactly in relation to said greater pressure limit.

In said configuration, the first ball 70 closes the first venting path due to the water present in the intermediate space 42 of the piston 40.

Moreover, the nut 50, which guides the sliding piston, moves against the wall of the body and stops the travel of the piston 40.

Furthermore, the seal ring 52 moves inside the end space of the body 8, making a seal between the piston and said body.

Furthermore, the seal ring 52 holds the piston in the raised position, overcoming its weight by virtue of the compression it is subjected to between the body and the piston, as well as the consequent friction.

As you can see, the device then comprises a second venting path, which is suitable for connecting the internal chamber 6 of the tank 2 to the outside. Said second path is at least partially separate from the first.

The piston 40, the base 60 and the insert 32 make a preferred embodiment of second intercepting means, set along said second venting path, which are suitable for moving from a closed configuration, wherein they close said second passage, to an open configuration, wherein they allow said second fluid to pass from the internal chamber 6 of the tank 2 to the outside.

In other words, the action of the water, brought to the greater pressure limit, not only keeps the first intercepting means in the closed configuration, but also influences said second intercepting means, opening them.

In other words again, said second intercepting means are sensitive to the pressure of the water, moving from said closed configuration to said open configuration when influenced by the water at a particular greater pressure limit.

Furthermore, the seal ring also makes a preferred embodiment of locking means, which are suitable for acting with said second intercepting means to hold them in said open configuration.

Continuing to heat the tank, the water continues to come out of said delivery tube, until there is none left, or almost.

The consumption of the water causes a sudden drop in pressure inside the device. However, the piston remains in the raised position, because of the action of the compressed seal ring.

If the liquid flows back from the delivery tube 15 towards the internal chamber 6 of the tank, the ball 80 moves into contact on the annular projection 22, blocking the passage of the water towards the internal chamber of the tank.

The ball 80 and the annular projection 22 make a preferred embodiment of non-return valve means, which are suitable for preventing the liquid from flowing back to said chamber of the tank.

To use the device again according to the above described methods, you simply have to operate the handle to lower the piston until it is brought back into the lowered position.

As you can see, the device can be used without the functionalities described above, keeping the piston in a raised position.

In this case, first you have a jet of air through the first venting path, and then water, without reaching the greater pressure limit, through the second venting path.

Innovatively, according to the present invention, the device allows water to be delivered at a set greater pressure limit, when air and water are initially contained in the tank.

Advantageously, the air is expelled before, and separately from the water, making sure that the water is expelled at a set greater pressure limit. Various laboratory tests have shown an excellent repeatability of the greater pressure limit at which the water is delivered.

The table below shows the results of the repeatability tests performed: the columns report the results related to the piston opening pressure of the piston, in other words the greater pressure limit at which the water comes out, for three different samples. Ten tests were carried out on each sample.

| n. test | Piston opening pressure [bar] | | |
|---|---|---|---|
| | Sample 1 | Sample 2 | Sample 3 |
| 1 | 2,32 | 2,32 | 2,43 |
| 2 | 2,20 | 2,38 | 2,29 |
| 3 | 2,42 | 2,30 | 2,32 |
| 4 | 2,45 | 2,43 | 2,40 |
| 5 | 2,20 | 2,32 | 2,43 |
| 6 | 2,26 | 2,30 | 2,38 |
| 7 | 2,38 | 2,35 | 2,40 |
| 8 | 2,35 | 2,48 | 2,25 |
| 9 | 2,38 | 2,49 | 2,45 |
| 10 | 2,46 | 2,38 | 2,35 |

According to a further advantageous feature, the air is initially expelled from openings, which cannot be accessed by a user, for example under the handle, consequently protecting the user from hot air jets.

Advantageously, the device also exhibits high user safety, because the parts are firmly connected and, in particular, the unscrewing of the body 8 from the flange 16 allows a venting of any air or water left in the tank by said safety millings, before the shank is completely unscrewed.

According to a further advantageous feature, the greater pressure limit is not only determined according to the sole weight of the piston and the parts coupled to it, but also according to the nominal sections of the device.

Clearly an expert in the field can make variations and modifications to the above described device, all of which are contained within the scope of protection, as defined by the following claims.

## Claims

1. Venting device (4) that can be connected to a tank (2), wherein said tank exhibits an internal chamber (6) containing a first fluid and a second fluid, wherein said device comprises:
- a first venting path suitable for joining said internal chamber (6) of the tank (2) to the outside;
- first intercepting means (46,62,70), set along said first venting path, which are suitable for going from an open configuration, wherein they allow said first fluid to pass from the chamber inside the tank to the outside, to a closed configuration, wherein they close said first path, and vice versa;
- a second venting path, which is suitable for joining said internal chamber (6) of the tank to the outside;
- second intercepting means (32,40,60), set along said second venting path, which are suitable for going from a closed configuration, wherein they close said second passage, to an open configuration, wherein they allow said second fluid to pass from the chamber inside the tank to the outside, and vice versa; wherein said first venting path and said second venting path exhibit a common part so that said first intercepting means can be influenced by said second fluid to go from said open configuration to said closed configuration.

2. Device according to claim 1, wherein said first intercepting means comprise a moving shutter suitable for floating when immersed in the second fluid.

3. Device according to claim 2, wherein said shutter is a ball (70).

4. Device-according to claim 2 or 3, wherein said shutter is made of elastomeric material.

5. Device according to any one of the preceding claims, wherein said second intercepting means comprise a piston (40), which closes said second venting path in said closed configuration of the second intercepting means.

6. Device according to claim 5, wherein said piston is hollow inside and houses said first intercepting means inside.

7. Device according to claim 6, wherein said piston slides inside a central space (14) of a body (8), and wherein said device comprises sealing means that are suitable for making a seal between said piston and said body, in said open configuration of the second intercepting means.

8. Device according to claim 7, wherein said sealing means comprise a seal ring (52), in said closed configuration of the second intercepting means, said seal ring being set in said central space (14) of the body (8).

9. Device according to any one of the claims from 5 to 8, wherein said device comprises guiding means for the piston, which are suitable for guiding said piston between said closed configuration and said open configuration of said second intercepting means.

10. Device according to any one of the previous claims, wherein said device comprises non-return valve means, which are suitable for preventing the fluids from flowing back from the device to said chamber of the tank.

11. Device according to claim 10, wherein said non-return valve means are set in said common part.

12. Device according to claim 10 or 11, wherein said non-return valve means comprise a ball (80) made of elastomer.

13. Device according to any one of the previous claims, wherein said first venting passage exhibits a first outlet opening to let the first fluid out and said second venting passage exhibits a second outlet opening to let the second fluid out, said first outlet and said second outlet being different from each other.

14. Device according to claim 13, wherein, after connecting the device to the tank, said first outlet is set at a height that is greater than the height at which said second outlet is set.

15. Device according to any one of the previous claims, also comprising locking means, which are suitable for acting with said second intercepting means to hold them in said open configuration.

16. Device according to claim 15, wherein said locking means comprise a seal ring (52).

17. Device according to claim 15 or 16, wherein said locking means comprise a handle (90) that is connected to said second intercepting means to bring them manually into said open configuration.

18. Device according to any one of the previous claims, comprising a body (8) with a central space (14) and a piston (40), sliding in said body (8), said first venting passage comprising at least one part of a cavity inside the piston.

19. Device according to claim 18, wherein said second venting passage comprises said central space (14) of the body (8) and at least one delivery tube (15) made in said body (8), which is joined to the outside.

20. Apparatus comprising a closed tank, with an internal chamber (6), and a venting device (4) made in accordance with any one of the previous claims, wherein said venting device is connected mechanically movably to said tank, said venting paths being fluidically joined to said chamber of the tank.

21. Apparatus according to claim 20, wherein said tank is suitable for heating.

## Patentansprüche

1. Entlüftungsvorrichtung (4), die mit einem Behälter (2) verbunden werden kann, wobei der Behälter eine Innenkammer (6) aufweist, die ein erstes Fluid und ein zweites Fluid enthält, wobei die Vorrichtung umfasst:
- einen ersten Entlüftungsweg, der geeignet ist, um die Innenkammer (6) des Behälters (2) mit dem Äußeren zu verbinden;
- erste Auffangmittel (46, 62, 70), die entlang des ersten Entlüftungswegs eingerichtet sind, die geeignet sind, von einem offenen Aufbau, in dem sie zulassen, dass das erste Fluid von der Kammer im Inneren des Behälters nach außen geht, zu einem geschlossenen Aufbau, in dem sie den ersten Weg schließen, überzugehen und umgekehrt;
- einen zweiten Entlüftungsweg, der geeignet ist, um die Innenkammer (6) des Behälters (2) mit dem Äußeren zu verbinden;
- zweite Auffangmittel (32, 40, 60), die entlang des zweiten Entlüftungswegs eingerichtet sind, die geeignet sind, von einem geschlossenen Aufbau, dem sie den zweiten Durchgang schließen, zu einem offenen Aufbau, in dem sie zulassen, dass das zweite Fluid von der Kammer im Inneren des Behälters nach außen geht, überzugehen und umgekehrt; wobei der erste Entlüftungsweg und der zweite Entlüftungsweg einen gemeinsamen Teil aufweisen, so dass die ersten Auffangmittel von dem zweiten Fluid beeinflusst werden können, um von dem offenen Aufbau in den geschlossenen Aufbau überzugehen.

2. Vorrichtung nach Anspruch 1, wobei die ersten Auffangmittel einen sich bewegenden Schließer umfassen, der geeignet ist, zu schwimmen, wenn er in das zweite Fluid getaucht ist.

3. Vorrichtung nach Anspruch 2, wobei der Schließer eine Kugel (70) ist.

4. Vorrichtung nach Anspruch 2 oder 3, wobei der Schließer aus elastomerem Material gefertigt ist.

5. Vorrichtung nach einem der vorangehenden Ansprüche, wobei die zweiten Auffangmittel einen Kolben (40) umfassen, der den zweiten Entlüftungsweg in dem geschlossenen Aufbau der zweiten Auffangmittel schließt.

6. Vorrichtung nach Anspruch 5, wobei der Kolben im Inneren hohl ist und die ersten Auffangmittel im Inneren unterbringt.

7. Vorrichtung nach Anspruch 6, wobei der Kolben im Inneren eines Mittelraums (14) eines Körpers (8) gleitet und wobei die Vorrichtung Dichtungsmittel umfasst, die geeignet sind, um in dem offenen Aufbau der zweiten Auffangmittel eine Dichtung zwischen dem Kolben und dem Körper zu machen.

8. Vorrichtung nach Anspruch 7, wobei die Dichtungsmittel einen Dichtungsring (52) umfassen, wobei der Dichtungsring in dem geschlossenen Aufbau der zweiten Auffangmittel in dem Mittelrum (14) des Körpers (8) eingerichtet ist.

9. Vorrichtung nach einem der Ansprüche 5 bis 8, wobei die Vorrichtung Führungsmittel für den Kolben umfasst, die geeignet sind, den Kolben zwischen dem geschlossenen Aufbau und dem offenen Aufbau der zweiten Auffangmittel zu führen.

10. Vorrichtung nach einem der vorangehenden Ansprüche, wobei die Vorrichtung Rückstromsperrventilmittel umfasst, die geeignet sind, zu verhindern, dass die Fluide von der Vorrichtung zurück in die Kammer des Behälters strömen.

11. Vorrichtung nach Anspruch 10, wobei die Rückstromsperrventilmittel in dem gemeinsamen Teil eingerichtet sind.

12. Vorrichtung nach Anspruch 10 oder 11, wobei die Rückstromsperrventilmittel eine aus Elastomer gefertigte Kugel (80) umfassen.

13. Vorrichtung nach einem der vorangehenden Ansprüche, wobei der erste Entlüftungsdurchgang eine erste Auslassöffnung aufweist, um das erste Fluid auszulassen, und der zweite Entlüftungsdurchgang eine zweite Auslassöffnung aufweist, um das zweite Fluid auszulassen, wobei der erste Auslass und der zweite Auslass sich voneinander unterscheiden.

14. Vorrichtung nach Anspruch 13, wobei der erste Auslass nach dem Verbinden der Vorrichtung mit dem Behälter auf einer Höhe eingerichtet ist, die höher als die Höhe ist, auf der der zweite Auslass eingerichtet ist.

15. Vorrichtung nach einem der vorangehenden Ansprüche, die auch Sperrmittel umfasst, die geeignet sind, mit den zweiten Auffangmitteln zu wirken, um sie in dem offenen Aufbau zu halten.

16. Vorrichtung nach Anspruch 15, wobei die Sperrmittel einen Dichtungsring (52) umfassen.

17. Vorrichtung nach Anspruch 15 oder 16, wobei die Sperrmittel einen Griff (90) umfassen, der mit den zweiten Auffangmitteln (90) verbunden ist, um sie manuell in den offenen Aufbau zu bringen.

18. Vorrichtung nach einem der vorangehenden Ansprüche, die einen Körper (8) mit einem Mittelraum (14) und einen in dem Körper (8) gleitenden Kolben (40) umfasst, wobei der erste Entlüftungsdurchgang wenigstens einen Teil einer Kavität bzw. eines Hohlraums im Inneren des Kolbens umfasst.

19. Vorrichtung nach Anspruch 18, wobei der zweite Entlüftungsdurchgang den Mittelraum (14) des Körpers (8) und wenigstens ein in dem Körper (8) gefertigtes Zuführungsrohr (15) umfasst, welches mit dem Äußeren verbunden ist.

20. Vorrichtung, die einen geschlossenen Behälter mit einer Innenkammer (6) und eine nach einem der vorhergehenden Ansprüche gefertigte Entlüftungsvorrichtung (4) umfasst, wobei die Entlüftungsvorrichtung mechanisch bewegbar mit dem Behälter verbunden ist, wobei die Entlüftungswege in einer Fluidverbindung mit der Kammer des Behälters stehen.

21. Vorrichtung nach Anspruch 20, wobei der Behälter zum Heizen geeignet ist.

## Revendications

1. Dispositif (4) de ventilation qui peut être raccordé à un réservoir (2), dans lequel ledit réservoir comporte une chambre (6) interne contenant un premier fluide et un deuxième fluide, dans laquelle ledit dispositif comprend:
- une première voie de ventilation adaptée pour relier ladite chambre (6) interne du réservoir (2) à l'extérieur;
- des premiers moyens (46, 62, 70) d'interception, installés le long de ladite première voie de ventilation, qui sont adaptés pour passer d'une configuration ouverte, dans laquelle ils permettent audit premier fluide de circuler de la chambre à l'intérieur du réservoir vers l'extérieur, à une configuration fermée, dans laquelle ils ferment ladite première voie, et vice versa;
- une deuxième voie de ventilation, adaptée pour raccorder ladite chambre (6) interne du réservoir à l'extérieur;
- des deuxièmes moyens (32, 40, 60) d'interception, installés le long de ladite deuxième voie de ventilation, qui sont adaptés pour passer d'une configuration fermée, dans laquelle ils ferment ledit deuxième passage, à une configuration ouverte, dans laquelle ils permettent audit deuxième fluide de circuler de la chambre à l'intérieur du réservoir vers l'extérieur, et vice versa ; dans lequel ladite première voie de ventilation et ladite deuxième voie de ventilation comportent une partie commune de sorte que lesdits premiers moyens d'interception peuvent, sous l'effet dudit deuxième fluide, passer de ladite configuration ouverte à ladite configuration fermée.

2. Dispositif selon la revendication 1, dans lequel lesdits premiers moyens d'interception comprennent un obturateur mobile adapté pour flotter lorsqu'il est immergé dans le deuxième fluide.

3. Dispositif selon la revendication 2, dans lequel ledit obturateur est une bille (70).

4. Dispositif selon la revendication 2 ou 3, dans lequel ledit obturateur est composé d'un matériau élastomère.

5. Dispositif selon l'une des revendications précédentes, dans lequel lesdits deuxièmes moyens d'interception comprennent un piston (40), qui ferme ladite deuxième voie de ventilation dans ladite configuration fermée des deuxièmes moyens d'interception.

6. Dispositif selon la revendication 5, dans lequel ledit piston est creux à l'intérieur et renferme lesdits premiers moyens d'interception.

7. Dispositif selon la revendication 6, dans lequel ledit piston coulisse à l'intérieur d'un espace (14) central d'un corps (8), et dans lequel ledit dispositif comprend des moyens d'obturation qui sont adaptés pour réaliser un joint étanche entre ledit piston et ledit corps, dans ladite configuration ouverte des deuxièmes moyens d'interception.

8. Dispositif selon la revendication 7, dans lequel lesdits moyens d'obturation comprennent une bague (52) d'étanchéité, dans ladite configuration fermée des deuxièmes moyens d'interception, ladite bague d'étanchéité étant installée dans l'espace (14) central du corps (8).

9. Dispositif selon l'une des revendications 5 à 8, dans lequel ledit dispositif comprend des moyens de guidage pour le piston, qui sont adaptés pour guider ledit piston entre ladite configuration fermée et ladite configuration ouverte desdits deuxièmes moyens d'interception.

10. Dispositif selon l'une des revendications précédentes, dans lequel ledit dispositif comprend des clapets anti-retour, qui sont adaptés pour empêcher les fluides de refouler du dispositif à ladite chambre du réservoir.

11. Dispositif selon la revendication 10, dans lequel lesdits clapets anti-retour sont installés dans ladite partie commune.

12. Dispositif selon la revendication 10 ou 11, dans lequel lesdits clapets anti retour comprennent une bille (80) composée d'élastomère.

13. Dispositif selon l'une des revendications précédentes, dans lequel ledit premier passage de ventilation comporte une première ouverture de sortie pour laisser le premier fluide sortir et ledit deuxième passage de ventilation comporte une deuxième ouverture de sortie pour laisser le deuxième fluide sortir, ladite première ouverture et ladite deuxième ouverture étant distinctes l'une de l'autre.

14. Dispositif selon la revendication 13, dans lequel, après avoir raccordé le dispositif au réservoir, ladite première ouverture est installée à une hauteur qui est supérieure à la hauteur à laquelle ladite deuxième ouverture est installée.

15. Dispositif selon l'une des revendications précédentes, comprenant également des moyens de verrouillage qui sont adaptés pour agir avec lesdits deuxièmes moyens d'interception pour les maintenir dans ladite configuration ouverte.

16. Dispositif selon la revendication 15, dans lequel lesdits moyens de verrouillage comprennent une bague (52) d'étanchéité.

17. Dispositif selon la revendication 15 ou 16, dans lequel lesdits moyens de verrouillage comprennent une poignée (90) qui est raccordée auxdits deuxièmes moyens d'interception pour les amener manuellement dans ladite configuration ouverte.

18. Dispositif selon l'une des revendications précédentes, comprenant un corps (8) avec un espace (14) central et un piston (40), coulissant dans ledit corps (8), ledit premier passage de ventilation comprenant au moins une partie d'une cavité à l'intérieur du piston.

19. Dispositif selon la revendication 18, dans lequel ledit deuxième passage de ventilation comprend ledit espace (14) central du corps (8) et au moins un tube (15) de distribution réalisé dans ledit corps (8), qui est relié à l'extérieur.

20. Appareil comprenant un réservoir fermé, avec une chambre (6) interne, et un dispositif (4) de ventilation réalisé selon l'une des revendications précédentes, dans lequel ledit dispositif de ventilation est raccordé de manière mécaniquement mobile audit réservoir, lesdites voies de ventilation étant reliées de manière fluidique à ladite chambre du réservoir.

21. Appareil selon la revendication 20, dans lequel ledit réservoir est adapté pour chauffer.
